# FASCICULE DE BREVET EUROPEEN

(11) **EP 3 642 004 B1**
(45) Date de publication et mention de la délivrance du brevet: **30.10.2024**
(21) Numéro de dépôt: 18749441.4
(22) Date de dépôt: 21.06.2018
(51) Int. Cl.: B29C 48/16, B29C 48/49, B29C 48/475, F04B 7/00, F04B 1/18

(54) **INSTALLATION, SOUS-ENSEMBLE ET PROCÉDÉ DE COEXTRUSION**
ANLAGE, UNTERBAUGRUPPE UND VERFAHREN ZUR KOEXTRUSION
INSTALLATION, SUB-ASSEMBLY AND METHOD FOR COEXTRUSION

(30) Priorité: 22.06.2017 FR 1755716
(43) Date de publication de la demande: 29.04.2020
(73) Titulaire: Compagnie Générale des Etablissements Michelin, 63000 Clermont-Ferrand (FR)
(72) Inventeur: OUGIER, Christophe, 63040 Clermont-Ferrand Cedex 9 (FR); LETOCART, Arnaud, 63040 Clermont-Ferrand Cedex 9 (FR)
(74) Mandataire: M.F.P. Michelin
(86) Numéro de dépôt international: PCT/FR2018/051513
(87) Numéro de publication internationale: WO 2018/234712

(56) Documents cités:
- EP-A1- 0 690 229
- WO-A1-03/016014
- WO-A1-2010/122268
- CN-A- 102 173 056
- DE-A1- 2 601 815
- FR-A1- 2 381 616
- JP-A- H04 298 320
- JP-A- H07 148 825
- JP-A- S63 154 327
- US-A- 4 005 167

## Description

L'invention concerne le domaine de l'extrusion des mélanges de caoutchouc plus particulièrement destinés à la fabrication des pneumatiques. Plus particulièrement, elle concerne la fabrication de profilé coextrudé à base de mélanges de caoutchouc de différentes compositions utilisé notamment pour fabriquer une bande de roulement ou un flanc de pneumatique.

De manière connue dans par exemple JP H07 148825 A, WO 2010/122268 A1, EP 0 690 229 A1 et FR 2 381 616 A1, une installation de fabrication des profilés complexes par extrusion d'au moins deux mélanges de caoutchouc de compositions différentes, ou coextrusion, comprend au moins deux extrudeuses reliées à une tête d'extrusion. Chaque extrudeuse est formée d'un corps cylindrique ou fourreau qui est fixe à l'intérieur duquel se trouve une vis coaxiale à l'axe longitudinal du fourreau et entraînée en rotation autour de celui-ci. Elle a pour fonction d'homogénéiser et de pousser un mélange caoutchouteux vers un orifice ou de sortie après l'avoir reçu sous forme de bande de mélange à un orifice d'alimentation. Pour un produit complexe, l'orifice de sortie de chaque extrudeuse débouche dans une tête d'extrusion commune qui reçoit ainsi des mélanges de caoutchouc de compositions différentes et comprend en sortie une filière d'extrusion qui définit le profil de la bande de caoutchouc. Ce profil est défini par une lame profilée fixe ou une paroi profilée fixe coopérant avec un rouleau rotatif.

La fabrication de pneumatiques fait de plus en plus appel à l'utilisation de produits complexes obtenus sous forme de semi-finis complexés afin de diminuer le nombre de poses successives de produits en assemblage et de diminuer ainsi le coût et accroître la précision.

De nos jours, le nombre de mélanges caoutchouteux différents utilisés pour fabriquer un seul pneumatique a tendance à augmenter de manière à pouvoir augmenter les propriétés du pneumatique en fonction de la zone dans laquelle ces mélanges sont localisés. Ceci s'applique plus particulièrement dans le cas d'une bande de roulement de pneumatique qui comportait en général deux mélanges caoutchouteux différents, et on rajoute actuellement d'autres mélanges, par exemple un mélange électriquement conducteur et des mélanges destinés à recouvrir les flancs aux niveaux des épaules.

Lors d'une fabrication de profilé par coextrusion, on fait converger des mélanges de compositions différentes vers une filière de sortie ce qui fait qu'on réalise un collage à cru, en pression et en température des mélanges, sans contact à l'air libre et avant profilage. Ceci permet d'obtenir une bonne tenue du produit coextrudé au niveau des interfaces entre les mélanges. Or, de par le fait que les propriétés rhéologiques différent d'un mélange à un autre, il est difficile de maîtriser parfaitement la géométrie de l'ensemble, en cause étant notamment la difficulté de positionnement d'un produit d'un certain mélange par rapport à un autre et son maintien dans le temps.

Le positionnement d'un produit par rapport à un autre est donné par un dispositif de profilage ou filière de sortie dans lequel arrivent les différents mélanges en provenance de différentes extrudeuses, sous forme d'extrudats qui ne se mélangent pas, afin de former le profilé complexe coextrudé en sortie. En pratique, la forme géométrique et les dimensions du dispositif de profilage sont déterminés par plusieurs boucles d'itération successives. Une fois le dispositif mis au point, il ne donne les résultats escomptés que lorsque les extrudeuses fonctionnent en régime continu et à une vitesse bien déterminée.

Le profilé coextrudé non-conforme représente actuellement une part non négligeable de la production de la machine. Plus les tirages sont courts dans l'optique d'une production flexible, plus les taux de chute sont élevés (5% à 20% en pratique). Il en résulte une baisse de la rentabilité de la machine. Par ailleurs, les pertes de matière étant économiquement inacceptables, les chutes dites mixtes (ou multi-composés) doivent être stockées, réhomogénéisées et réintroduites de façon maitrisée, précisément dosée, dans les productions suivantes. Le surcoût de fabrication que cela engendre s'accompagne, de surcroit, d'une baisse des performances du produit finalement obtenu qui est en partie pollué par les autres mélanges.

Par ailleurs, on doit contrôler le produit coextrudé en continu, en mesurant le poids linéaire du produit sortant et en le comparant à un poids préétabli. De plus, on évalue la forme et les dimensions du produit complexe (largeur, épaisseur) à l'aide de différents capteurs.

On connait ainsi le document WO 2015/028166 qui décrit une méthode de fabrication de bande de roulement pour pneumatique par coextrusion de mélanges différents en provenance de plusieurs extrudeuses agencées en parallèles, dans laquelle le profil transversal est analysé par des capteurs sans contact. Le profil de chaque partie constituant la bande est lu par un capteur, les profils étant analysés ensuite par une unité centrale de contrôle qui commande le fonctionnement de chaque extrudeuse. Le réglage du fonctionnement d'une extrudeuse se fait en ajustant la vitesse de rotation de la vis et la pression en bout de la vis, juste avant la sortie. Toutefois, son fonctionnement dépend également de la mise en régime thermique du mélange, de la mise en régime thermique de la filière, de la vitesse d'extrusion, de la rhéologie du mélange, de la perturbation de l'alimentation de la bande, etc. Tous ces facteurs perturbent le débit de l'extrudeuse, ce qui fait que de nombreux réglages sont nécessaires avant d'obtenir un produit conforme.

Par ailleurs, les mesures effectuées avec des capteurs optiques ne suffisent toutefois pas pour garantir le bon positionnement à l'intérieur d'un produit complexe de ses différents constituants, l'un par rapport à l'autre, ni de visualiser de leurs interfaces respectives, surtout quand ils sont superposés. De ce fait, une dernière vérification se fait par prélèvement d'échantillons. Les échantillons prélevés lors de toutes ces mises au point ne peuvent pas être recyclés car il s'agit d'un ensemble composite et ils sont jetés, ce qui génère des pertes de matière et augmente le coût global des produits obtenus.

On connait par ailleurs le document CN102173042 qui décrit un agencement de deux extrudeuses comportant chacune en sortie une pompe à engrenages pour réaliser un produit coextrudé à base de caoutchouc. Un tel agencement permet d'ajuster le débit du matériau débité par une extrudeuse en ajustant la vitesse de la pompe en sortie. L'inconvénient majeur d'une telle solution est l'encombrement important de la pompe à engrenage, ce qui impacte directement la taille de l'outillage de mise en forme. Par ailleurs, un diamètre réduit des engrenages de la pompe a pour conséquence un échauffement de la gomme avec risque de vulcanisation précoce.

Il s'est par ailleurs avéré que les valeurs du débit obtenu en sortie de chaque voie d'une installation du type précité qui utilise une extrudeuse qui débite dans une pompe à engrenages varient dans des limites assez larges. Or, lors de la fabrication d'un produit complexe du type flanc ou bande de roulement de pneumatique qui est posé directement sur une carcasse et envoyé ensuite en vulcanisation, la précision du profilé obtenu dépend directement de la maîtrise du débit de mélange d'élastomère extrudé sur chaque voie de l'installation de coextrusion.

Un objectif de l'invention est de remédier aux inconvénients des documents précités et de proposer une installation de coextrusion pour des mélanges d'élastomères dont le débit peut être ajusté de manière très précise.

Cet objectif est atteint par l'invention qui propose une installation de coextrusion selon la revendication 1, sous-ensemble selon la revendication 7 et procédé selon la revendication 9 pour produire un profilé complexe pour pneumatiques réalisé à base de mélanges de caoutchouc de compositions différentes comportant au moins une première extrudeuse comportant une vis ayant un axe longitudinal et au moins une deuxième extrudeuse comportant une vis ayant un axe longitudinal et une tête d'extrusion reliée à chacune desdites extrudeuses par des canaux appropriés, caractérisé en ce que la vis de chaque extrudeuse constitue l'élément de gavage d'une pompe à pistons.

Autrement dit, on relie chaque extrudeuse d'une installation de coextrusion à une pompe volumétrique à pistons (comportant un ou plusieurs pistons) qui dose précisément la quantité de mélange d'élastomères envoyées dans chaque canal la reliant à la tête d'extrusion. On obtient donc une installation de coextrusion volumétrique, dans laquelle les sorties des différentes extrudeuses sont reliées à une tête d'extrusion commune, les pompes à pistons axiaux étant placées en amont de celle-ci.

Avantageusement, ladite pompe est une pompe comportant deux pistons axiaux d'axes parallèles à l'axe longitudinal de l'extrudeuse.

Une telle pompe volumétrique à pistons axiaux est une pompe comportant une chambre de mise sous pression du mélange d'élastomères (ou gomme) ainsi que deux chambres de dosage de la gomme coopérant avec la chambre de mise sous pression. Chaque chambre de dosage débouche dans un canal de circulation de la gomme qui, à son tour, débouche dans une chambre d'admission d'un organe de distribution de la gomme (ou mélange d'élastomères). La pompe comprend également deux pistons d'axes parallèles à l'axe longitudinal de l'extrudeuse, les pistons étant mobiles dans les chambres de dosage entre un point mort haut PMH et un point mort bas PMB selon un mouvement alternatif de translation. La pompe est une pompe volumétrique adaptée au fonctionnement avec un mélange caoutchouteux. Une telle pompe est mieux décrite dans les documents EP0400496 et EP0690229.

Il a été constaté, lors des tests effectués en laboratoire que la précision de réglage du débit de mélange était dix fois supérieure à celle d'une installation similaire utilisant des pompes à engrenages reliées à des extrudeuses sur les différentes voies de l'installation.

Dans un premier mode de réalisation, la pompe à pistons axiaux st agencée en sortie de l'extrudeuse. Ceci permet d'obtenir un dosage extrêmement précis de la gomme, tout en permettant au mélange de sortir radialement par le chemin le plus court et de limiter ainsi l'élévation de la température de celui-ci.

De préférence, les axes des extrudeuses sont parallèles entre eux, pour une installation de moindre encombrement et un écoulement facilité des mélanges vers la tête d'extrusion.

Dans un deuxième mode de réalisation, la pompe à pistons axiaux est agencée en amont de la sortie de l'extrudeuse. Ceci permet d'utiliser la partie aval de la vis de l'extrudeuse pour réaliser le vidage complet du canal de sortie.

De préférence, les axes des extrudeuses font un angle aigu entre eux.

Les axes longitudinaux des vis d'extrusion des extrudeuses sont agencés de manière à faire converger les mélanges qu'elles transportent vers la tête d'extrusion du profilé coextrudé. L'axe longitudinal d'une extrudeuse fait un angle aigu (inférieur à 90°) avec l'axe de l'extrudeuse adjacente. Le profilé coextrudé est obtenu ainsi obtenu par coextrusion des deux flux séparés de mélange, via des canaux d'écoulement qui relient l'orifice de sortie des extrudeuses à la tête d'extrusion. La tête d'extrusion est du type nez plat ou elle comporte une lame fixe profilée qui coopère avec un rouleau rotatif sur lequel est posé le produit coextrudé.

Avantageusement, les axes des extrudeuses sont agencés chacun dans un plan vertical ou incliné par rapport à un plan vertical.

Ceci permet un fonctionnement optimum de l'installation et prévient tout écoulement intempestif de lubrifiant en provenance du mécanisme d'entraînement des pistons de la pompe, lubrifiant qui ne risque pas d'être mélangé à la gomme présente dans les chambres de dosage.

De préférence, l'installation comporte une unité de contrôle qui synchronise la vitesse de rotation de la vis avec la fréquence du mouvement alternatif des pistons de la pompe à pistons axiaux.

Cela permet de moduler la quantité de travail à apporter au mélange dont le débit est fourni par la pompe à pistons axiaux. Ainsi, la vitesse de la vis de l'extrudeuse est choisie proportionnellement à la fréquence du mouvement alternatif des pistons et donc au remplissage des chambres de dosage de la pompe et également en fonction de la quantité de cisaillement que l'on veut apporter au mélange. Par exemple, une vitesse réduite de la vis apporte plus de cisaillement et d'échauffement au mélange, alors qu'une vitesse de la vis proche de celle des engrenages assure un transfert plus rapide du mélange vers la sortie de l'extrudeuse.

L'objectif de l'invention est également atteint avec un procédé de coextrusion pour produire un profilé complexe pour pneumatiques réalisé à base de mélanges de caoutchouc de compositions différentes comportant au moins une première extrudeuse comportant une vis ayant un axe longitudinal et au moins une deuxième extrudeuse comportant une vis ayant un axe longitudinal et une tête d'extrusion reliée à chacune desdites extrudeuses par des canaux appropriés, caractérisé en ce que la vis de chaque extrudeuse est l'élément de gavage en mélange d'élastomères d'une pompe à pistons.

Avantageusement, on synchronise la vitesse de rotation de la vis avec la fréquence du mouvement alternatif des pistons de la pompe à pistons.

L'invention sera mieux comprise grâce à la suite de la description, qui s'appuie sur les figures suivantes :
- les figures 1a et 1b illustrent par des vues en coupe une installation selon un premier mode de réalisation de l'invention;
- les figures 2a et 2b illustrent par des vues en coupe une installation selon un deuxième mode de réalisation de l'invention ;
- les figures 3a à 3c illustrent des exemples d'installations de coextrusion de l'invention.

Sur les différentes figures, les éléments identiques ou similaires portent la même référence. Leur description n'est donc pas systématiquement reprise.

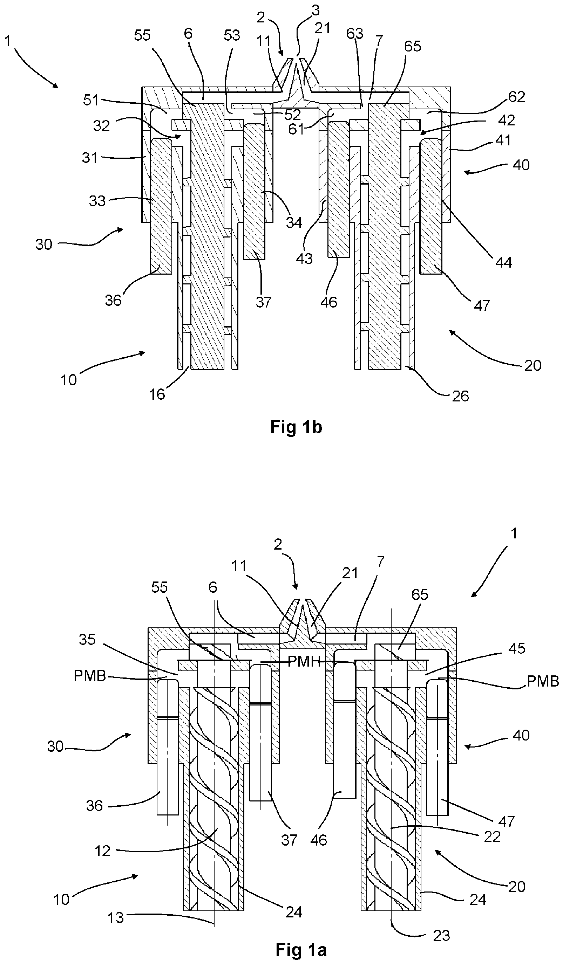

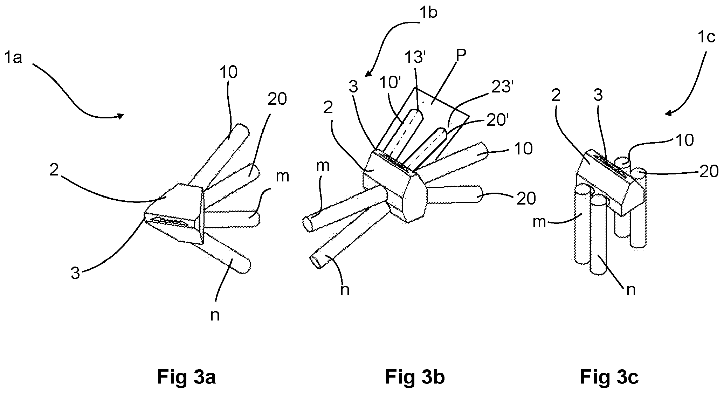

Les figures 1a et 1b illustrent une installation 1 de coextrusion selon un premier mode de réalisation de l'invention. La vue en coupe est réalisée avec un plan qui est parallèle au plan de symétrie d'une tête d'extrusion 2 (configuration mieux visible à la fig. 3c). L'installation comprend deux extrudeuses 10 et 20 qui débitent chacune un mélange d'élastomère de composition différente qui arrive dans la tête d'extrusion 2 via un canal 11, respectivement 21.

Par gomme, caoutchouc ou élastomère, on entend de préférence tout type d'élastomère, diénique ou non diénique par exemple thermoplastique, ou un mélange d'élastomères : caoutchouc naturel et caoutchouc synthétique, de charges renforçantes : noir de carbone et silice, de plastifiants : huiles, résines, et d'autres éléments chimiques comme le soufre par exemple. L'installation d'extrusion de l'invention vise à réaliser un profilé coextrudé à base de mélanges différents. De tels mélanges d'élastomères différents sont, à titre d'exemple les mélanges élastomères ou de gomme utilisés pour créer un ensemble de bande de roulement tels : un premier matériau en caoutchouc naturel à 100% pour réaliser une sous-couche avec un, puis un deuxième matériau pour réaliser la bande de roulement en caoutchouc synthétique à 100%. On peut rajouter un troisième, voire un quatrième matériau pour réaliser les flancs composé d'un mélange de caoutchouc naturel/ caoutchouc synthétique (20% à 80% de caoutchouc naturel).

L'extrudeuse 10 comprend une vis d'extrusion 12 ou vis d'Archimède et un fourreau 14 de réception de la vis qui est entraînée en rotation, autour de son axe longitudinal 13, à son extrémité amont, par un motoréducteur de type connu (non illustré sur les dessins). Le fourreau 14 comporte une entrée d'alimentation 16 en mélange d'élastomères et une sortie 17 qui débouche dans un canal de transfert 6 du mélange dans le canal 11.

L'extrudeuse 20 comprend une vis d'extrusion 22 ou vis d'Archimède et un fourreau 24 de réception de la vis qui est entraînée en rotation, autour de son axe longitudinal 23, à son extrémité amont, par un motoréducteur de type connu (non illustré sur les dessins). Le fourreau 24 comporte une entrée d'alimentation 26 en mélange d'élastomères et une sortie 27 qui débouche dans un canal de transfert 7 du mélange dans le canal 21. Les axes longitudinaux 13 et 23 des vis d'extrusion sont parallèles entre eux et sont perpendiculaires aux canaux de transfert 6, 7 qui relient chacun la sortie d'une extrudeuse à la tête d'extrusion 2 et se trouvent dans l'axe de symétrie de celle-ci.

Selon l'invention, la vis 13, 23 de chaque extrudeuse 10, 20 constitue l'élément de gavage d'une pompe à piston 30, 40, notamment une pompe volumétrique à pistons axiaux. Une telle pompe volumétrique à pistons axiaux utilisée avec une installation de coextrusion permet de doser le mélange d'élastomères utilisé pour fabriquer un produit complexe par coextrusion.

La pompe volumétrique à pistons axiaux 30 comprend un corps 31 de pompe délimitant une chambre 32 de mise sous pression du mélange d'élastomères (ou gomme). Elle comprend également une première 33 et une deuxième 34 chambre de dosage de la gomme coopérant avec la chambre 32 de mise sous pression grâce à des orifices de communication 35. Chaque chambre de dosage débouche dans un canal 51, 52 de circulation de la gomme qui, à son tour, débouche dans une chambre d'admission 53 d'un organe de distribution 55 de la gomme (ou mélange d'élastomères). La pompe comprend également deux pistons 36, 37 d'axes parallèles à l'axe longitudinal de l'extrudeuse, les pistons étant mobiles en coulissement dans les chambres de dosage 33, 34 entre un point mort haut PMH et un point mort bas PMB selon un mouvement alternatif de translation.

La pompe volumétrique à pistons axiaux 40 comprend un corps 41 de pompe délimitant une chambre 42 de mise sous pression du mélange d'élastomères (ou gomme). Elle comprend également une première 43 et une deuxième 44 chambre de dosage de la gomme coopérant avec la chambre 42 de mise sous pression grâce à des orifices de communication 45. Chaque chambre de dosage débouche dans un canal 61, 62 de circulation de la gomme qui, à son tour, débouche dans une chambre d'admission 63 d'un organe de distribution de la gomme (ou mélange d'élastomères). La pompe comprend également deux pistons 46, 47 d'axes parallèles à l'axe longitudinal de l'extrudeuse, les pistons étant mobiles en coulissement dans les chambres de dosage 43, 44 entre un point mort haut PMH et un point mort bas PMB selon un mouvement alternatif de translation.

L'entraînement en mouvement alternatif des pistons axiaux 36, 37 et respectivement 46, 47 est fait à l'aide d'une came rotative mue par un motoréducteur. Les détails de construction et de fonctionnement d'une telle pompe sont décrits dans les documents EP0400496 et EP0690229 qui sont ici incorporés par référence.

La chambre d'admission 53, 63 de chaque pompe débouche dans un canal de refoulement 6, respectivement 7 de la gomme qui communiquent directement avec les canaux d'écoulement 11, 21 de la tête d'extrusion 2.

La vis 12, respectivement 22 de l'extrudeuse 10, respectivement 20 comporte une partie axiale filetée de cisaillement du mélange d'élastomères lors de sa mise en rotation autour de son axe principal ou longitudinal à l'intérieur du fourreau de l'extrudeuse. Ceci permet de mélanger, homogénéiser et mettre en température le mélange. L'extrémité axiale haute (côté sortie du mélange) de chaque vis 12, respectivement 22 forme l'organe de distribution 55, 65 de la pompe 30, respectivement 40.

En fonctionnement, on entraîne en rotation la vis 12, respectivement 22 de chaque extrudeuse 10, 20 et on déplace les pistons 36, 37, respectivement 46, 47 dans les chambres de dosage 33, 34, respectivement 43, 44 de la pompe 30, respectivement 40. Les pistons sont mobiles dans les chambres de dosage entre un point mort haut PMH, qui correspond à une phase de refoulement de la gomme depuis la chambre de dosage vers la canal de refoulement, et un point mort bas PMB, qui correspond à une phase d'admission de la gomme dans la chambre de dosage depuis la chambre de mise sous pression. Les pistons sont mobiles selon un mouvement alternatif en opposition de phase, c'est-à-dire que chaque piston oscille entre ses positions PMH et PMB et, lorsqu'un des pistons est au point mort haut, l'autre piston de la même pompe est au point mort bas. Lorsque chaque piston est au point mort haut, il délimite la chambre de mise sous pression.

L'organe de distribution 55, 65 est mobile en rotation autour de l'axe 13, respectivement 23 par rapport au corps 31, 41 de la pompe entre une position de refoulement de la gomme de chaque chambre de dosage 33, 34, respectivement 43,44 correspondant à la position PMH de chaque piston et une position d'admission de la gomme dans chaque chambre de dosage correspondant à la position PMB de chaque piston. L'organe de distribution est synchronisé avec chaque piston de la pompe. Ainsi, la position de refoulement correspond à une mise en communication entre la chambre de dosage et le canal de refoulement via la chambre d'admission. La position d'admission correspond à une mise en communication entre la chambre de mise sous pression et la chambre de dosage de chaque pompe.

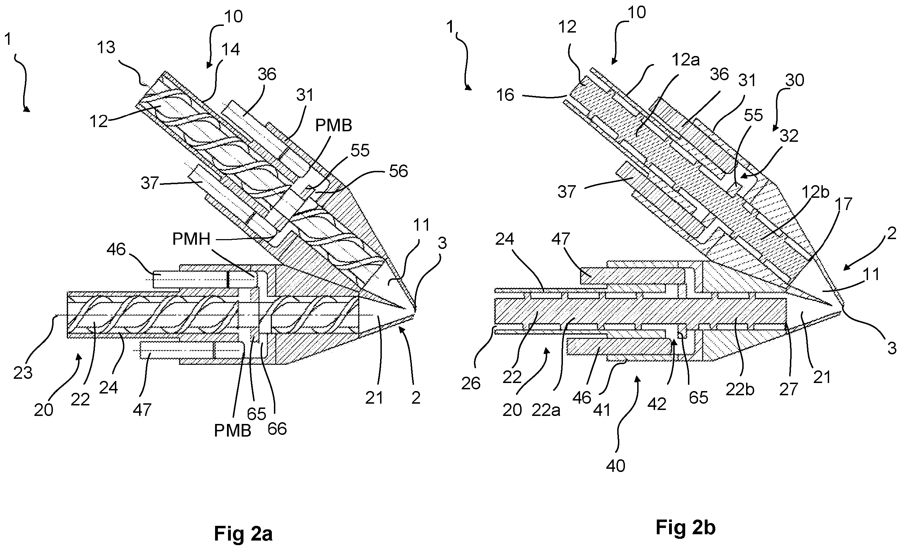

Dans le deuxième mode de réalisation illustré aux figures 2a et 2b, les axes longitudinaux 13 et 23 des extrudeuses 10, 20 convergent vers la tête d'extrusion 2 et se trouvent dans l'axe de symétrie de celle-ci (configuration du type illustré aux fig. 3a et 3b). Dans ce cas, les orifices de sortie 17, respectivement 27 des extrudeuses 10, 20, débouchent directement dans les canaux d'écoulement 11, 21 de la tête d'extrusion 2. Ce mode de réalisation permet de déporter la pompe à pistons de chaque extrudeuse en amont de la tête d'extrusion pour un encombrement moindre de l'installation.

De manière similaire au premier mode de réalisation, on retrouve des pompes à pistons axiaux ayant une construction similaire, mais agencées au-delà de la sortie du mélange. Dans une variante avantageuse de réalisation de l'invention, la pompe à pistons axiaux 30, 40 est placée de manière à ce que les chambres d'admission 53, 63 débouchent dans un orifice de refoulement 56, 66 situé à une distance comprise entre 1/3 et ½ de la longueur de la vis d'extrusion 12, 22 tel que mesuré à partir de l'orifice de sortie 17, 27 de celle-ci. L'organe de distribution 55, respectivement 65 est porté par la vis d'extrusion 12, 22 en étant situé dans un entaille prévue à cet effet sur la longueur de la vis.

Ceci présente l'avantage de pouvoir utiliser une première partie 12a, respectivement 22a de la longueur de la vis 12, 22, à partir de l'orifice d'alimentation 16, 26 de celle-ci, pour fluidifier et mettre en température le mélange qui y est introduit, la partie restante 12b, respectivement 22b de sa longueur étant utilisée pour transporter la gomme bien dosée vers les canaux d'écoulement 11, 21. Ceci présente l'avantage de pouvoir vider complètement l'extrudeuse en fin d'opération. Cette variante présente également l'avantage d'une construction très compacte, d'encombrement réduit. On peut ainsi agencer plusieurs extrudeuses côte-à-côte juxtaposées verticalement et qui alimentent les canaux d'écoulement d'une tête d'extrusion commune.

Les figures 3a à 3c illustrent des exemples d'installations de coextrusion selon l'invention utilisant plusieurs extrudeuses qui débitent dans une tête d'extrusion d'un produit complexe coextrudé.

L'installation 1a de la figure 3a illustre un agencement de plusieurs extrudeuses disposées toutes dans le plan de symétrie de la tête d'extrusion 2. Chaque extrudeuse 10, 20, m, n est une extrudeuse volumétrique, la vis d'extrusion de chaque extrudeuse constituant l'élément de gavage d'une pompe à pistons axiaux, comme précédemment décrit.

L'installation 1b de la figure 3b illustre un agencement de plusieurs extrudeuses disposées de part et d'autre du plan de symétrie de la tête d'extrusion 2. Chaque extrudeuse 10, 20, m, n est une extrudeuse volumétrique, la vis d'extrusion de chaque extrudeuse constituant l'élément de gavage d'une pompe à pistons axiaux, comme précédemment décrit.

L'installation 1c de la figure 3c illustre un agencement de plusieurs extrudeuses disposées côte-à-côte et de part et d'autre du plan de symétrie de la tête d'extrusion 2. Chaque extrudeuse 10, 20, m, n est une extrudeuse volumétrique, la vis d'extrusion de chaque extrudeuse constituant l'élément de gavage d'une pompe à pistons axiaux, comme précédemment décrit.

Dans une autre variante, non illustrée aux figures, on agence au moins deux extrudeuses supplémentaires 10', 20' avec les axes longitudinaux 13', 23' dans un même plan P qui coupe le plan de symétrie de la tête d'extrusion 2. On s'arrange pour que les deux extrudeuses 10', 20' débitent dans des canaux d'écoulement qui se trouvent dans le plan défini par les axes 13', 23' pour un encombrement optimisé des extrudeuses. Cette variante illustrée sur la figure 3b s'applique également en combinaison avec les agencements illustrés aux figures 3a et 3c.

Dans une variante, au moins deux des extrudeuses 10, 20, m, n débitent un même mélange d'élastomères (de même composition).

L'installation comprend une unité de contrôle qui est apte à ajuster la vitesse de rotation des vis 12,22 des extrudeuses 10, 20 et celle de la came d'entraînement des pistons axiaux de chaque pompe, notamment en fonction de dimensions du profilé coextrudé et des propriétés rhéologiques des matériaux transportés.

L'unité de contrôle actionne, en fonction des dimensions souhaitées du profilé complexe coextrudé ou en fonction du régime de fonctionnement (vitesse variable, conditions de marche et arrêt) la vitesse des motoréducteurs d'entraînement des vis d'extrusion. La vitesse de rotation de la came d'actionnement des pistons de la pompe à pistons axiaux est directement proportionnelle avec la variation du débit. Ceci permet à l'unité de commande d'ajuster le débit fourni par l'organe distributeur au sein de chaque extrudeuse 10, 20 en fonction de dimensions du produit coextrudé et également de le maintenir constant en fonctionnement.

Dans une variante, les dimensions du profilé complexe coextrudé, notamment la largeur et l'épaisseur, sont préétablies et mesurées à l'aide d'un capteur optique situé en sortie de la tête d'extrusion 2. Le capteur vérifie les dimensions du profilé coextrudé et sa conformité avec des dimensions préétablies en étant est relié à l'unité de contrôle. Dans une variante, un capteur de poids mesure le poids du profilé coextrudé et est relié à l'unité de contrôle qui ajuste ainsi de manière encore plus fine les tolérances du produit coextrudé.

Dans une autre variante, l'unité de contrôle est également reliée aux moyens de tirage de la bande de profilé coextrudé pour en ajuster la vitesse.

Lorsque l'installation est en mode de fonctionnement, la commande des pompes à pistons et celle des extrudeuses permet de fournir un débit de matériau constant et mesurable en sortie de l'installation, et donc une extrusion volumétrique sur chaque voie. Les extrudats qui arrivent en sortie de chaque extrudeuse sont envoyés sous pression et sans se mélanger dans les canaux 11, 12 de la filière 2 pour obtenir ainsi un profilé coextrudé.

D'autres variantes et modes de réalisation de l'invention peuvent être envisagés sans sortir du cadre de ces revendications.

Ainsi, dans des variantes, la pompe à pistons axiaux comporte un nombre de pistons différent que ceux des exemples illustrés. Dans une variante, la pompe comporte un seul piston et une seule chambre de dosage. Dans une autre variante, la pompe comporte quatre pistons qui remplissent quatre chambres de dosage.

Dans une variante plus économique, un seul motoréducteur entraîne en mouvement les pistons de la pompe à pistons axiaux et la vis de l'extrudeuse de gavage.

Dans une autre variante, l'installation de l'invention la pompe à pistons est une pompe à pistons radiaux.

## Revendications

1. Installation (1) de coextrusion pour produire un profilé complexe pour pneumatiques réalisé à base de mélanges de caoutchouc de compositions différentes, ladite installation comportant une tête d'extrusion (2), ainsi qu'au moins une première extrudeuse (10) comportant une vis (12) ayant un axe longitudinal (13) ainsi qu'un fourreau (14) de réception de la vis (12) comportant une entrée d'alimentation (16) en mélange de caoutchouc et une sortie (17) qui débouche dans un canal (11) d'écoulement qui relie ladite sortie (17) à la tête d'extrusion (2), ladite installation comportant également au moins une deuxième extrudeuse (20) comportant une vis (22) ayant un axe longitudinal (23) ainsi qu'un fourreau (24) de réception de la vis (22) comportant une entrée d'alimentation (26) en mélange de caoutchouc et une sortie (27) qui débouche dans un canal (21) d'écoulement qui relie ladite sortie (27) à la tête d'extrusion (2), ladite installation étant **caractérisée en ce que** la vis (12, 22) de chaque extrudeuse (10, 20) constitue l'élément de gavage d'une pompe volumétrique à pistons (30, 40) qui comporte un ou plusieurs pistons, qui dose la quantité de mélange de caoutchouc envoyée dans chaque canal (11, 21) d'écoulement reliant l'extrudeuse (10, 20) à la tête d'extrusion, et qui est agencée en amont de la sortie (17, 27) de ladite extrudeuse (10, 20), de sorte que l'on peut utiliser une première partie (12a, 22a) de la longueur de la vis (12, 22) de l'extrudeuse (10, 20), à partir de l'entrée d'alimentation (16, 26), pour fluidifier et mettre en température le mélange de caoutchouc, tandis que la partie restante (12b, 22b) de la longueur de ladite vis (12, 22) de l'extrudeuse (10, 20) est utilisée pour transporter le mélange de caoutchouc dosé par la pompe volumétrique à pistons (30, 40) vers les canaux (11, 21) d'écoulement reliant la sortie (17, 27) de l'extrudeuse (10, 20) à la tête d'extrusion.

2. Installation selon la revendication 1, **caractérisée en ce que** la pompe volumétrique à pistons (30, 40) est une pompe comportant deux pistons (36, 37, 46, 47) axiaux d'axes parallèles à l'axe longitudinal (13, 23) de l'extrudeuse.

3. Installation selon la revendication 2 **caractérisée en ce que** la pompe volumétrique à pistons (30, 40) comprend un corps de pompe (31, 41) délimitant une chambre (32, 42) de mise sous pression du mélange de caoutchouc, ladite pompe volumétrique à pistons (30, 40) comprenant également une première chambre de dosage (33, 43) et une deuxième chambre de dosage (34, 44), dans lesquelles les pistons (36, 37, 46, 47) sont mobiles en coulissement entre un point mort haut (PMH), qui correspond à une phase de refoulement du mélange de caoutchouc depuis la chambre de dosage (33, 43, 34, 44), et un point mort bas (PMB) qui correspond à une phase d'admission du mélange de caoutchouc dans la chambre de dosage, lesdites première et deuxième chambres de dosage (33, 43, 34, 44) coopérant avec la chambre (32, 42) de mise sous pression grâce à des orifices de communication (35, 45) et débouchant dans une chambre d'admission (53, 63) d'un organe de distribution (55, 65), lequel organe de distribution (55, 65) est porté par la vis (12, 22) de l'extrudeuse (10, 20), de sorte que ledit organe de distribution (55, 65) est mobile en rotation autour de l'axe longitudinal (13, 23) entre une position de refoulement du mélange de caoutchouc de la chambre de dosage (33, 34, 43, 44) considérée, correspondant à la position point mort haut (PMH) du piston, et une position d'admission du mélange de caoutchouc dans la chambre de dosage (33, 34, 43, 44), correspondant à la position point mort bas (PMB) du piston, et **en ce que** les chambres d'admission (53, 63) de l'organe de distribution (55, 65) débouchent dans un orifice de refoulement (56, 66) situé à une distance comprise entre 1/3 et ½ de la longueur de la vis d'extrusion (12, 22) telle que mesurée à partir de la sortie (17, 27)..

4. Installation (1) selon l'une des revendications 1 à 3, **caractérisée en ce que** les axes (13, 23) des extrudeuses (10, 20) font un angle aigu entre eux.

5. Installation selon l'une des revendications précédentes, **caractérisée en ce que** les axes (13, 23) des extrudeuses (10, 20) sont agencés chacun dans un plan vertical ou incliné par rapport à un plan vertical.

6. Installation selon l'une des revendications 1 à 5, **caractérisée en ce qu'**elle comporte une unité de contrôle qui synchronise la vitesse de rotation de la vis (12, 22) avec la fréquence du mouvement alternatif des pistons de la pompe à pistons.

7. Sous-ensemble pour une installation selon l'une des revendications 1 à 6 ledit sous-ensemble comprenant une extrudeuse (10) qui comporte une vis (12) ayant un axe longitudinal (13) ainsi qu'un fourreau (14) de réception de la vis (12) comportant une entrée d'alimentation (16) en mélange de caoutchouc et une sortie (17) destinée à déboucher dans un canal (11) d'écoulement, ledit sous-ensemble étant **caractérisée en ce que** la vis (12) de l'extrudeuse (10) constitue l'élément de gavage d'une pompe volumétrique à pistons (30) qui comporte un ou plusieurs pistons, qui est destinée à doser la quantité de mélange de caoutchouc envoyée dans le canal (11) d'écoulement, et qui est agencée en amont de la sortie (17) de ladite extrudeuse (10), de sorte que l'on peut utiliser une première partie (12a, 22a) de la longueur de la vis (12) de l'extrudeuse (10), à partir de l'entrée d'alimentation (16), pour fluidifier et mettre en température le mélange de caoutchouc, tandis que la partie restante (12b) de la longueur de ladite vis (12) de l'extrudeuse (10) est utilisée pour transporter le mélange de caoutchouc, dosé par la pompe volumétrique à pistons (30), vers le canal (11) d'écoulement relié à la sortie (17) de l'extrudeuse (10).

8. Sous-ensemble selon la revendication 7 **caractérisé en ce que** la pompe volumétrique à pistons (30) est une pompe comportant deux pistons (36, 37) axiaux d'axes parallèles à l'axe longitudinal (13) de l'extrudeuse (10), **en ce que** la pompe volumétrique à pistons (30) comprend un corps de pompe (31) délimitant une chambre (32) de mise sous pression du mélange de caoutchouc, ladite pompe volumétrique à pistons (30) comprenant également une première chambre de dosage (33) et une deuxième chambre de dosage (34), dans lesquelles les pistons (36, 37) sont mobiles en coulissement entre un point mort haut (PMH), qui correspond à une phase de refoulement du mélange de caoutchouc depuis la chambre de dosage (33, 34), et un point mort bas (PMB) qui correspond à une phase d'admission du mélange de caoutchouc dans la chambre de dosage, lesdites première et deuxième chambres de dosage (33, 34) coopérant avec la chambre (32) de mise sous pression grâce à des orifices de communication (35) et débouchant dans une chambre d'admission (53) d'un organe de distribution (55), lequel organe de distribution (55) est porté par la vis (12) de l'extrudeuse (10), de sorte que ledit organe de distribution (55) est mobile en rotation autour de l'axe longitudinal (13) entre une position de refoulement du mélange de caoutchouc de la chambre de dosage (33, 34) considérée, correspondant à la position point mort haut (PMH) du piston, et une position d'admission du mélange de caoutchouc dans la chambre de dosage (33, 34), correspondant à la position point mort bas (PMB) du piston, et **en ce que** la chambre d'admission (53) de l'organe de distribution (55) débouche dans un orifice de refoulement (56) situé à une distance comprise entre 1/3 et ½ de la longueur de la vis d'extrusion (12) telle que mesurée à partir de la sortie (17).

9. Procédé de coextrusion pour produire un profilé complexe pour pneumatiques réalisé à base de mélanges de caoutchouc de compositions différentes comportant au moins une première extrudeuse (10) comportant une vis (12) ayant un axe longitudinal (13) et au moins une deuxième extrudeuse (20) comportant une vis (22) ayant un axe longitudinal (23) et une tête d'extrusion (2) reliée à la sortie (17, 27) de chacune desdites extrudeuses par des canaux (11, 21) d'écoulement appropriés, **caractérisé en ce que** la vis de chaque extrudeuse (10, 20) est l'élément de gavage en mélange d'élastomères d'une pompe à pistons (30, 40) qui est agencée en amont de la sortie (17, 27) de ladite extrudeuse (10, 20), de sorte que l'on utilise une première partie (12a, 22a) de la longueur de la vis (12, 22) de l'extrudeuse (10, 20) pour fluidifier et mettre en température le mélange de caoutchouc, on dose ledit mélange de caoutchouc au moyen de la pompe volumétrique à pistons (30, 40), et l'on utilise la partie restante (12b, 22b) de la longueur de ladite vis (12, 22) de l'extrudeuse (10, 20) pour transporter le mélange de caoutchouc dosé par la pompe volumétrique à pistons (30, 40) vers les canaux (11, 21) d'écoulement reliant la sortie (17, 27) de l'extrudeuse (10, 20) à la tête d'extrusion.

10. Procédé selon la revendication 9, **caractérisé en ce qu'**on synchronise la vitesse de rotation de la vis (12, 22) avec la fréquence du mouvement alternatif des pistons de la pompe à pistons (30, 40).

## Patentansprüche

1. Anlage (1) zur Koextrusion, um ein komplexes Profil für Reifen herzustellen, das auf Basis von Kautschukmischungen mit unterschiedlichen Zusammensetzungen ausgeführt ist, wobei die Anlage einen Extrusionskopf (2) umfasst sowie mindestens einen ersten Extruder (10), der eine Schnecke (12) mit einer Längsachse (13) umfasst sowie einen Zylinder (14) zur Aufnahme der Schnecke (12), der einen Zuführeinlass (16) zum Zuführen einer Kautschukmischung umfasst und einen Auslass (17), der in einen Auslaufkanal (11) mündet, der den Auslass (17) mit dem Extrusionskopf (2) verbindet, wobei die Anlage auch mindestens einen zweiten Extruder (20) umfasst, der eine Schnecke (22) mit einer Längsachse (23) umfasst sowie einen Zylinder (24) zur Aufnahme der Schnecke (22), der einen Zuführeinlass (26) zum Zuführen einer Kautschukmischung umfasst und einen Auslass (27), der in einen Auslaufkanal (21) mündet, der den Auslass (27) mit dem Extrusionskopf (2) verbindet, wobei die Anlage **dadurch gekennzeichnet ist, dass** die Schnecke (12, 22) jedes Extruders (10, 20) das Speiseelement einer Verdrängerkolbenpumpe (30, 40) darstellt, die einen oder mehrere Kolben umfasst, die die Kautschukmischungsmenge dosiert, die in jeden Auslaufkanal (11, 21) geleitet wird, der den Extruder (10, 20) mit dem Extrusionskopf verbindet, und die stromauf des Auslasses (17, 27) des Extruders (10, 20) angeordnet ist, so dass man einen ersten Teil (12a, 22a) der Länge der Schnecke (12, 22) des Extruders (10, 20), ausgehend von dem Zuführeinlass (16, 26), dazu verwenden kann, die Kautschukmischung zu verflüssigen und auf Temperatur zu bringen, während der restliche Teil (12b, 22b) der Länge der Schnecke (12, 22) des Extruders (10, 20) dazu verwendet wird, die von der Verdrängerkolbenpumpe (30, 40) dosierte Kautschukmischung zu den Auslaufkanälen (11, 21) zu befördern, die den Auslass (17, 27) des Extruders (10, 20) mit dem Extrusionskopf verbinden.

2. Anlage nach Anspruch 1, **dadurch gekennzeichnet, dass** die Verdrängerkolbenpumpe (30, 40) eine Pumpe ist, die zwei axiale Kolben (36, 37, 46, 47) mit Achsen umfasst, die parallel zu der Längsachse (13, 23) des Extruders sind.

3. Anlage nach Anspruch 2, **dadurch gekennzeichnet, dass** die Verdrängerkolbenpumpe (30, 40) ein Pumpengehäuse (31, 41) aufweist, das eine Kammer (32, 42) zur Druckbeaufschlagung der Kautschukmischung begrenzt, wobei die Verdrängerkolbenpumpe (30, 40) auch eine erste Dosierkammer (33, 43) und eine zweite Dosierkammer (34, 44) aufweist, in denen die Kolben (36, 37, 46, 47) zwischen einem oberen Totpunkt (PMH), der einer Phase des Förderns der Kautschukmischung aus der Dosierkammer (33, 43, 34, 44) entspricht, und einem unteren Totpunkt (PMB), der einer Phase des Einlassens der Kautschukmischung in die Dosierkammer entspricht, verschieblich sind, wobei die ersten und zweiten Dosierkammern (33, 43, 34, 44) mit der Kammer (32, 42) zur Druckbeaufschlagung dank von Verbindungsöffnungen (35, 45) zusammenwirken und in eine Einlasskammer (53, 63) eines Verteilorgans (55, 65) münden, wobei das Verteilorgan (55, 65) von der Schnecke (12, 22) des Extruders (10, 20) getragen wird, so dass das Verteilorgan (55, 65) um die Längsachse (13, 23) herum drehbeweglich ist zwischen einer Stellung des Förderns der Kautschukmischung der betrachteten Dosierkammer (33, 34, 43, 44), die der oberen Totpunktstellung (PMH) des Kolbens entspricht, und einer Stellung des Einlassens der Kautschukmischung in die Dosierkammer (33, 34, 43, 44), die der unteren Totpunktstellung (PMB) des Kolbens entspricht, und dadurch, dass die Einlasskammern (53, 63) des Verteilorgans (55, 65) in eine Förderöffnung (56, 66) münden, die in einem Abstand zwischen 1/3 und ½ der Länge der Extrusionsschnecke (12, 22), gemessen ab dem Auslass (17, 27), gelegen ist.

4. Anlage (1) nach einem der Ansprüche 1 bis 3, **dadurch gekennzeichnet, dass** die Achsen (13, 23) der Extruder (10, 20) einen spitzen Winkel untereinander bilden.

5. Anlage nach einem der vorhergehenden Ansprüche, **dadurch gekennzeichnet, dass** die Achsen (13, 23) der Extruder (10, 20) jeweils in einer vertikalen oder in Bezug auf eine vertikale Ebene geneigten Ebene angeordnet sind.

6. Anlage nach einem der Ansprüche 1 bis 5, **dadurch gekennzeichnet, dass** sie eine Steuerungseinheit umfasst, die die Drehzahl der Schnecke (12, 22) mit der Frequenz der Hin- und Her-Bewegung der Kolben der Kolbenpumpe synchronisiert.

7. Unterbaugruppe für eine Anlage nach einem der Ansprüche 1 bis 6, wobei die Unterbaugruppe einen Extruder (10) aufweist, der eine Schnecke (12) mit einer Längsachse (13) umfasst sowie einen Zylinder (14) zur Aufnahme der Schnecke (12), der einen Zuführeinlass (16) zum Zuführen von Kautschukmischung umfasst und einen Auslass (17), der dazu bestimmt ist, in einen Auslaufkanal (11) zu münden, wobei die Unterbaugruppe **dadurch gekennzeichnet ist, dass** die Schnecke (12) des Extruders (10) das Speiseelement einer Verdrängerkolbenpumpe (30) darstellt, die einen oder mehrere Kolben umfasst, die dazu bestimmt ist, die Kautschukmischungsmenge zu dosieren, die in den Auslaufkanal (11) geleitet wird, und die stromauf des Auslasses (17) des Extruders (10) angeordnet ist, so dass man einen ersten Teil (12a, 22a) der Länge der Schnecke (12) des Extruders (10), ausgehend von dem Zuführeinlass (16), dazu verwenden kann, die Kautschukmischung zu verflüssigen und auf Temperatur zu bringen, während der restliche Teil (12b) der Länge der Schnecke (12) des Extruders (10) dazu verwendet wird, die von der Verdrängerkolbenpumpe (30) dosierte Kautschukmischung zu dem Auslaufkanal (11) zu befördern, der mit dem Auslass (17) des Extruders (10) verbunden ist.

8. Unterbaugruppe nach Anspruch 7, **dadurch gekennzeichnet, dass** die Verdrängerkolbenpumpe (30) eine Pumpe ist, die zwei axiale Kolben (36, 37) mit zur Längsachse (13) des Extruders (10) parallelen Achsen umfasst, dass die Verdrängerkolbenpumpe (30) ein Pumpengehäuse (31) aufweist, das eine Kammer (32) zur Druckbeaufschlagung der Kautschukmischung begrenzt, wobei die Verdrängerkolbenpumpe (30) auch eine erste Dosierkammer (33) und eine zweite Dosierkammer (34) aufweist, in denen die Kolben (36, 37) zwischen einem oberen Totpunkt (PMH), der einer Phase des Förderns der Kautschukmischung aus der Dosierkammer (33, 43) entspricht, und einem unteren Totpunkt (PMB), der einer Phase des Einlassens der Kautschukmischung in die Dosierkammer entspricht, verschieblich sind, wobei die ersten und zweiten Dosierkammern (33, 34) mit der Kammer (32) zur Druckbeaufschlagung dank von Verbindungsöffnungen (35) zusammenwirken und in eine Einlasskammer (53) eines Verteilorgans (55) münden, wobei das Verteilorgan (55) von der Schnecke (12) des Extruders (10) getragen wird, so dass das Verteilorgan (55) um die Längsachse (13) herum drehbeweglich ist zwischen einer Stellung des Förderns der Kautschukmischung der betrachteten Dosierkammer (33, 34), die der oberen Totpunktstellung (PMH) des Kolbens entspricht, und einer Stellung des Einlassens der Kautschukmischung in die Dosierkammer (33, 34), die der unteren Totpunktstellung (PMB) des Kolbens entspricht, und dass die Einlasskammer (53) des Verteilorgans (55) in eine Förderöffnung (56) mündet, die in einem Abstand zwischen 1/3 und ½ der Länge der Extrusionsschnecke (12), gemessen ab dem Auslass (17), gelegen ist.

9. Verfahren zur Koextrusion, um ein komplexes Profil für Reifen herzustellen, das auf Basis von Kautschukmischungen mit unterschiedlichen Zusammensetzungen ausgeführt ist, umfassend mindestens einen ersten Extruder (10), der eine Schnecke (12) mit einer Längsachse (13) umfasst, und mindestens einen zweiten Extruder (20), der eine Schnecke (22) mit einer Längsachse (23) umfasst, und einen Extrusionskopf (2), der mit dem Auslass (17, 27) jedes der Extruder durch geeignete Auslaufkanäle (11, 21) verbunden ist, **dadurch gekennzeichnet, dass** die Schnecke jedes Extruders (10, 20) das Speiseelement für Elastomermischung einer Kolbenpumpe (30, 40) ist, die stromauf des Auslasses (17, 27) des Extruders (10, 20) angeordnet ist, so dass man einen ersten Teil (12a, 22a) der Länge der Schnecke (12, 22) des Extruders (10, 20) dazu verwendet, die Kautschukmischung zu verflüssigen und auf Temperatur zu bringen, man die Kautschukmischung mittels der Verdrängerkolbenpumpe (30, 40) dosiert und man den restlichen Teil (12b, 22b) der Länge der Schnecke (12, 22) des Extruders (10, 20) dazu verwendet, die von der Verdrängerkolbenpumpe (30, 40) dosierte Kautschukmischung zu den Auslaufkanälen (11, 21) zu befördern, die den Auslass (17, 27) des Extruders (10, 20) mit dem Extrusionskopf verbinden.

10. Verfahren nach Anspruch 9, **dadurch gekennzeichnet, dass** man die Drehzahl der Schnecke (12, 22) mit der Frequenz der Wechselbewegung der Kolben der Kolbenpumpe (30, 40) synchronisiert.

## Claims

1. Coextrusion installation (1) for producing a complex profiled element for tyres made from rubber compounds of different compositions, said installation comprising an extrusion head (2), and at least one first extruder (10) comprising a screw (12) having a longitudinal axis (13) and a barrel (14) for receiving the screw (12) comprising a feed inlet (16) for supplying rubber compound and an outlet (17) which opens into a flow channel (11) which connects said outlet (17) to the extrusion head (2), said installation also comprising at least one second extruder (20) comprising a screw (22) having a longitudinal axis (23) and a barrel (24) for receiving the screw (22) comprising a feed inlet (26) for supplying rubber compound and an outlet (27) which opens into a flow channel (21) which connects said outlet (27) to the extrusion head (2), said installation being **characterized in that** the screw (12, 22) of each extruder (10, 20) constitutes the booster element feeding a positive-displacement piston pump (30, 40) which comprises one or more pistons, which meters the amount of rubber compound fed into each flow channel (11, 21) connecting the extruder (10, 20) to the extrusion head, and which is arranged upstream of the outlet (17, 27) of said extruder (10, 20) so that a first portion (12a, 22a) of the length of the screw (12, 22) of the extruder (10, 20), starting from the feed inlet (16, 26), can be used to fluidize and heat the rubber compound, while the remaining portion (12b, 22b) of the length of said screw (12, 22) of the extruder (10, 20) is used to transport the rubber compound metered by the positive-displacement piston pump (30, 40) to the flow channels (11, 21) connecting the outlet (17, 27) of the extruder (10, 20) to the extrusion head.

2. Installation according to Claim 1, **characterized in that** the positive-displacement piston pump (30, 40) is a pump with two axial pistons (36, 37, 46, 47) having axes parallel to the longitudinal axis (13, 23) of the extruder.

3. Installation according to Claim 2, **characterized in that** the positive-displacement piston pump (30, 40) comprises a pump body (31, 41) delimiting a pressurizing chamber (32, 42) for pressurizing the rubber compound, said positive-displacement piston pump (30, 40) also comprising a first metering chamber (33, 43) and a second metering chamber (34, 44), in which chambers the pistons (36, 37, 46, 47) are slidably movable between a top dead centre (TDC), which corresponds to a phase in which the rubber compound is discharged from the metering chamber (33, 43, 34, 44), and a bottom dead centre (BDC) which corresponds to a phase in which the rubber compound is admitted into the metering chamber, said first and second metering chambers (33, 43, 34, 44) cooperating with the pressurizing chamber (32, 42) by means of communication orifices (35, 45) and opening into an inlet chamber (53, 63) of a distribution member (55, 65), which distribution member (55, 65) is carried by the screw (12, 22) of the extruder (10, 20), so that said distribution member (55, 65) is rotatable about the longitudinal axis (13, 23) between a discharge position in which the rubber compound is discharged from the respective metering chamber (33, 34, 43, 44), corresponding to the top dead centre (TDC) position of the piston, and a position in which the rubber compound is admitted into the metering chamber (33, 34, 43, 44), corresponding to the bottom dead centre (BDC) position of the piston, and **in that** the inlet chambers (53, 63) of the distribution member (55, 65) open into a discharge orifice (56, 66) located at a distance between 1/3 and 1/2 of the length of the extrusion screw (12, 22) as measured from the outlet (17, 27).

4. Installation (1) according to one of Claims 1 to 3, **characterized in that** the axes (13, 23) of the extruders (10, 20) make an acute angle between them.

5. Installation according to one of the preceding claims, **characterized in that** the axes (13, 23) of the extruders (10, 20) are each arranged in a vertical plane or a plane inclined with respect to a vertical plane.

6. Installation according to one of Claims 1 to 5, **characterized in that** it has a control unit that synchronizes the speed of rotation of the screw (12, 22) with the frequency of the reciprocating movement of the pistons of the piston pump.

7. Subassembly for an installation according to one of Claims 1 to 6, said subassembly comprising an extruder (10) which comprises a screw (12) having a longitudinal axis (13) and a barrel (14) for receiving the screw (12) comprising a feed inlet (16) for rubber compound and an outlet (17) intended to open into a flow channel (11), said subassembly being **characterized in that** the screw (12) of the extruder (10) constitutes the booster element feeding a positive-displacement piston pump (30) which comprises one or more pistons, which is intended for metering the quantity of rubber compound fed into the flow channel (11) and which is arranged upstream of the outlet (17) of said extruder (10) so that a first portion (12a, 22a) of the length of the screw (12) of the extruder (10), starting from the feed inlet (16), can be used to fluidize and heat the rubber compound, while the remaining portion (12b) of the length of said screw (12) of the extruder (10) is used to transport the rubber compound, metered by the positive-displacement piston pump (30) to the flow channel (11) connected to the outlet (17) of the extruder (10).

8. Subassembly according to Claim 7, **characterized in that** the positive-displacement piston pump (30) is a pump comprising two axial pistons (36, 37) with axes parallel to the longitudinal axis (13) of the extruder (10), **in that** the positive-displacement piston pump (30) comprises a pump body (31) defining a pressurizing chamber (32) for pressurizing the rubber compound, said positive-displacement piston pump (30) also comprising a first metering chamber (33) and a second metering chamber (34), in which chambers the pistons (36, 37) are slidably movable between a top dead centre (TDC), which corresponds to a phase in which the rubber compound is discharged from the metering chamber (33, 34), and a bottom dead centre (BDC) corresponding to a phase in which the rubber compound is admitted into the metering chamber, said first and second metering chambers (33, 34) cooperating with the pressurizing chamber (32) by means of communication orifices (35) and opening into an inlet chamber (53) of a distribution member (55), which distribution member (55) is carried by the screw (12) of the extruder (10), in such a way that said distribution member (55) is rotatable about the longitudinal axis (13) between a position in which the rubber compound is discharged from the relevant metering chamber (33, 34), corresponding to the top dead centre (TDC) position of the piston, and a position in which the rubber compound is admitted into the metering chamber (33, 34), corresponding to the bottom dead centre (BDC) position of the piston, and **in that** the inlet chamber (53) of the distribution member (55) opens into a discharge orifice (56) located at a distance of between 1/3 and 1/2 of the length of the extrusion screw (12) as measured from the outlet (17).

9. Coextrusion method for producing a complex profiled element for tyres, the profiled element being made from rubber compounds of different compositions, comprising at least one first extruder (10) comprising a screw (12) having a longitudinal axis (13) and at least one second extruder (20) comprising a screw (22) having a longitudinal axis (23) and an extrusion head (2) connected to the outlet (17, 27) of each of said extruders by appropriate flow channels (11, 21), **characterized in that** the screw of each extruder (10, 20) is the booster element feeding elastomer compounds to a piston pump (30, 40) which is arranged upstream of the outlet (17, 27) of said extruder (10, 20) such that a first portion (12a, 22a) of the length of the screw (12, 22) of the extruder (10, 20) is used to fluidize and heat the rubber compound, said rubber compound is metered by the positive-displacement piston pump (30, 40), and the remaining portion (12b, 22b) of the length of said screw (12, 22) of the extruder (10, 20) is used to convey the rubber compound metered by the positive-displacement piston pump (30, 40) to the flow channels (11, 21) connecting the outlet (17, 27) of the extruder (10, 20) to the extrusion head.

10. Method according to Claim 9, **characterized in that** the speed of rotation of the screw (12, 22) is synchronized with the frequency of the reciprocating movement of the pistons of the piston pump (30, 40).
